# EUROPÄISCHE PATENTANMELDUNG

(11) **EP 2 730 389 A1**
(43) Veröffentlichungstag der Anmeldung: **14.05.2014**
(21) Anmeldenummer: 13189041.0
(22) Anmeldetag: 17.10.2013
(51) Int. Cl.: B29C 45/57, B29C 44/34

(54) **Vorrichtung zum Spritzgießen von Kunststoffformteilen**

(30) Priorität: 12.11.2012 DE 102012110825
(71) Anmelder: NKS M. Baukloh, 58540 Meinerzhagen (DE)
(72) Erfinder: Baukloh, Horst, 58540 Meinerzhagen (DE)
(74) Vertreter: Dörner, Kötter & Kollegen

(57) **Zusammenfassung**

Die Erfindung betrifft eine Vorrichtung zum Spritzgießen von Kunststoffformteilen (6), umfassend eine eine Schneckenwelle (11) aufweisende Spritzeinheit (1) und eine Schließeinheit (3), die ein Spritzgießwerkzeug (4) aufnimmt, wobei zwischen Spritzeinheit (1) und Schließeinheit (3) ein Multifunktions-Baustein (2) angeordnet ist, der Mittel zur spritzeinheitunabhängigen Druckbeaufschlagung der in das Spritzgießwerkzeug (4) eingebrachten Formmasse (61) aufweist.

## Beschreibung

Die Erfindung betrifft eine Vorrichtung zum Spritzgießen von Kunststoffformteilen nach dem Oberbegriff des Patentanspruchs 1.

Spritzgießmaschinen sind im Wesentlichen aus zwei Funktionseinheiten gebildet, einer Spritzeinheit, durch die Formmasse aufbereitet und unter Druck in das Spritzgießwerkzeug eingespritzt wird, und eine Schließeinheit, welche das Spritzgießwerkzeug aufnimmt und dieses öffnet und schließt. Die Spritzeinheit umfasst einen Schneckenzylinder, in der eine Schnecke über einen Antrieb rotierbar angeordnet ist. In dem Schneckenzylinder wird die Formmasse über Heizelemente plastifiziert und homogenisiert. An der Spitze des Schneckenzylinders ist eine Düse angeordnet, die den Übergang zum Spritzgießwerkzeug bildet. Nach dem Einspritzen der Formmasse in das Spritzgießwerkzeug ist es erforderlich, einen Nachdruck aufrecht zu erhalten, um den Volumenschwund auszugleichen. Hierzu verbleibt Formmasse im Zylinder, welche durch die Schnecke in Richtung des Spritzgießwerkzeugs gepresst wird, wodurch der erforderliche Nachdruck gebildet ist.

Nachteilig an der vorbekannten Vorrichtung ist, dass diese lange Zykluszeiten erfordert, welche dadurch bedingt sind, dass die Schnecke zur Aufrechterhaltung des Nachdrucks blockiert ist.

Hier will die Erfindung Abhilfe schaffen. Der Erfindung liegt die Aufgabe zu Grunde, eine Vorrichtung zum Spritzgießen vom Kunststoffformteilen zu schaffen, bei der die Aufbereitung von Formmasse in dem Schneckenzylinder unmittelbar nach Einspritzen der zuvor aufbereiteten Formmasse in das Spritzgießwerkzeug ermöglicht ist. Gemäß der Erfindung wird diese Aufgabe durch die Merkmale des kennzeichnenden Teils des Patentanspruchs 1 gelöst.

Mit der Erfindung ist eine Vorrichtung zum Spritzgießen von Kunststoffformteilen geschaffen, welche eine unmittelbare Aufbereitung von Formmasse in dem Schneckenzylinder nach Einspritzen zuvor aufbereiteter Formmasse in das Spritzgießwerkzeug ermöglicht ist. Durch die Zwischenschaltung eines als Nachdruckmodul fungierenden Multifunktions-Bausteins, welches Mittel zur spritzeinheitunabhängigen Druckbeaufschlagung der in das Werkzeug eingebrachten Formmasse aufweist, ist ein Nachdruck über die Schnecke nicht mehr erforderlich. Diese ist unmittelbar nach dem Einspritzvorgang zur Aufbereitung weiterer Formmasse in dem Schneckenzylinder einsetzbar. Hierdurch ist eine signifikante Verkürzung der Zykluszeiten erzielt.

In Weiterbildung der Erfindung weist der Multifunktions-Baustein einen Durchlaufkanal auf, durch den die Formmasse von der Spritzeinheit in das von der Schließeinheit aufgenommene Spritzgießwerkzeug einbringbar ist und der an seinem der Spritzeinheit zugewandten Ende über ein Ventil verschließbar ist, wobei wenigstens ein Druckkanal angeordnet ist, der in dem Durchlaufkanal mündet und der mit Mitteln zur Druckerzeugung verbunden ist. Hierdurch ist durch den Multifunktions-Baustein ein einfach realisierbares, zuverlässiges Nachdruckmodul gebildet. Unmittelbar nach einem Druckaufbau innerhalb des Druckkanals wird das Ventil gegenüber der Spritzeinheit geschlossen, sodass in dem Schneckenzylinder die Aufbereitung weiterer Formmasse aufgenommen werden kann. Dabei ist das Ventil bevorzugt durch eine dem Drucklaufkanal vorgelagerte Kugel gebildet. Diese Kugel wird nach Aufbau eines Drucks in dem Durchlaufkanal gegen den Auslass der Schließeinheit gepresst, wodurch dieser verschlossen ist.

In weiterer Ausgestaltung der Erfindung umfassen die Mittel zur Druckerzeugung einen Kolben, der in dem Druckkanal geführt ist. Hierdurch ist durch einfaches Verschieben des Kolbens innerhalb des Druckkanals unmittelbar ein genau dosierbarer Druck erzielbar.

In einer weiteren Ausgestaltung der Erfindung weist der Multifunktions-Baustein einen Durchlaufkanal auf, in den ein Speisekanal der Spritzeinheit mündet, durch den Formmasse durch den Durchlaufkanal hindurch in das von der Schließeinheit aufgenommene Spritzgießwerkzeug einbringbar ist, wobei ein Kolben angeordnet ist, der in dem Durchlaufkanal geführt ist und derart verschiebbar ist, dass der Speisekanal der Spritzeinheit verschlossen ist. Hierdurch ist eine unmittelbare Druckerzeugung in dem Durchlaufkanal bei gleichzeitigem Verschließen des Speisekanals der Spritzeinheit ermöglicht. Ein separates Ventil ist nicht erforderlich. Durch den von dem Kolben initiierten Druck innerhalb des Durchlaufkanals ist der erforderliche Nachdruck auf die in dem Durchlaufkanal befindliche Formmasse erzielt. Zudem ist die Herstellung von Produkten im Sandwich-Verfahren ermöglicht.

In Weiterbildung der Erfindung ist der Durchlaufkanal über einen Anschluss mit einer Einspritzvorrichtung für physikalische oder chemische Kunststoffschäume verbunden. Hierdurch ist die Herstellung geschäumter Kunststoffteile mit verbesserter Oberfläche ermöglicht.

Bevorzugt ist der Kolben derart angeordnet und verschiebbar geführt, dass in einer Position der Speisekanal und der Anschluss der Einspritzvorrichtung für physikalische oder chemische Kunststoffschäume verschlossen sind. Hierdurch ist eine unmittelbare Druckerzeugung in den Durchlaufkanal bei gleichzeitigem Verschließen von Speisekanal und Anschluss der Einspritzvorrichtung ermöglicht.

In weiterer Ausgestaltung der Erfindung sind die Mittel zur Druckbeaufschlagung mit einem Frequenzgenerator verbunden, derart, dass eine gepulste Druckbeaufschlagung erzielbar ist. Hierdurch ist eine verbesserte Qualität des herzustellenden Formteils aufgrund verminderter Schwindung erzielt. Durch den gepulsten Druck, der insbesondere durch Vibration des Kolbens innerhalb des Durchlaufkanals erzeugt ist, bleibt der durch den Formmassepuffer in dem Durchlaufkanal gebildete Anguss länger durchlässig und dem Entstehen von Schwimmhäuten und Einfallstellen ist wirksam entgegen gewirkt.

In weiterer Ausgestaltung der Erfindung sind zwei Schließeinheiten angeordnet, die jeweils ein Spritzgießwerkzeug aufnehmen und die über einen Multifunktions-Baustein mit einer Spritzeinheit verbunden sind. Hierdurch ist eine signifikante Erhöhung der Produktionsmenge erzielt. Dadurch, dass die Schnecke durch den Multifunktionsbaustein nicht mehr durch einen Nachdruckvorgang blockiert ist, ist ein wechselseitiges Füllen der beiden Spritzgießwerkzeuge ermöglicht.

Andere Weiterbildungen und Ausgestaltungen der Erfindung sind in den übrigen Unteransprüchen angegeben. Zwei Ausführungsbeispiele der Erfindung sind in den Zeichnungen dargestellt und werden nachfolgend im Einzelnen beschrieben. Es zeigen:
- Figur 1: die schematische Darstellung einer Vorrichtung zum Spritzgießen von Kunststoffformteilen;
- Figur 2: die schematische Darstellung des Multifunktions-Bausteins der Vorrichtung aus Figur 1 in einer weiteren Ausführungsform;
- Figur 3: die schematische Darstellung einer Vorrichtung zum Spritzgießen von Kunststoffformteilen in einer weiteren Ausführungsform und
- Figur 4: die schematische Darstellung einer Vorrichtung zum Spritzgießen von Kunststoffformteilen in einer dritten Ausführungsform.

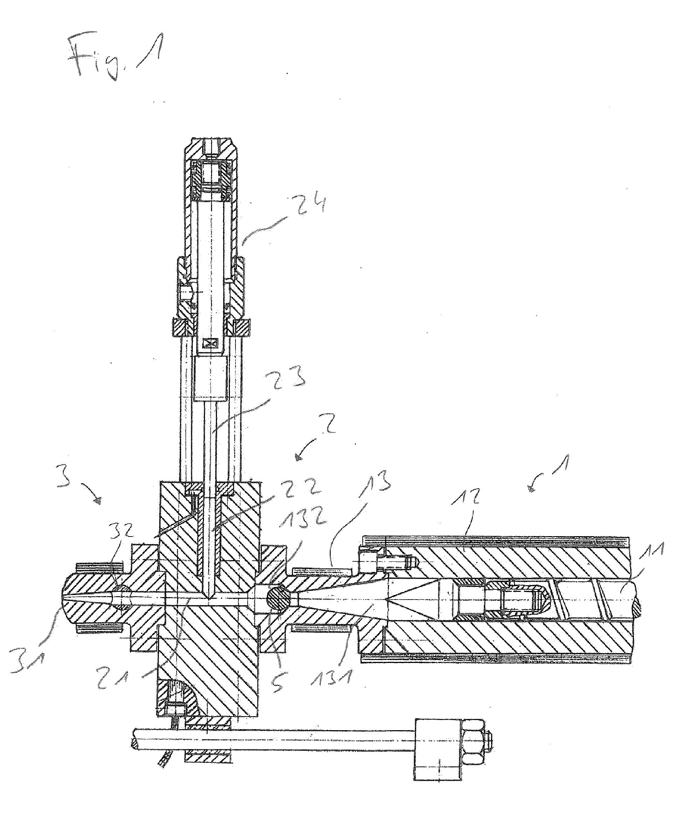

Die als Ausführungsbeispiel gewählte Vorrichtung zum Spitzgießen von Kunststoffformteilen gemäß Figur 1 ist im Wesentlichen gebildet aus einer Spritzeinheit 1, die über einen Multifunktions-Baustein 2 mit einer Schließeinheit 3 verbunden ist, die ein Spritzgießwerkzeug 4 aufnimmt.

Die Spritzeinheit 1 umfasst in bekannter Art und Weise eine Schneckenwelle 11, die in einem Schneckenzylinder 12 über einen - nicht dargestellten - Antrieb rotierbar und axial bewegbar angeordnet ist. Im nicht dargestellten hinteren Bereich des Schneckenzylinders 12 ist zur Befüllung des Schneckenzylinders 12 ein Trichter angeordnet. An seinen dem Multifunktions-Baustein 2 zugewandten Ende ist an dem Schneckenzylinder 12 ein Flanschteil 13 angeordnet, das mit einer konisch zulaufenden Bohrung versehen ist, die in einen erweiterten Kugelraum 132 mündet. Der maximale Durchmesser der konischen Bohrung 131 entspricht dem Innendurchmesser des Schneckenzylinders 12, an dem sich die Bohrung 131 anschließt.

Der Multifunktions-Baustein 2 ist im Wesentlichen zylinderförmig ausgebildet. Mittig ist durch den Multifunktions-Baustein 2 ein Durchlaufkanal 21 eingebracht, der sich an den Kugelraum 132 des Flanschteils 13 anschließt. Orthogonal zu dem Durchlaufkanal 21 ist in dem Multifunktions-Baustein 2 ein Druckkanal 22 eingebracht, der in den Durchlaufkanal 21 mündet und in den der Kolben 23 eines Zylinders 24 ragt, über den der Kolben 23 innerhalb des Druckkanals 22 bewegbar ist.

Der Multifunktions-Baustein 2 ist mit der Schließeinheit 3 verbunden, wobei der Durchlaufkanal 21 des Multifunktions-Bausteins 2 mit der Düse 31 der Schließeinheit 3 fluchtet. Innerhalb der Düse 31 der Schließeinheit 3 ist ein hydraulischer Verschluss 32 angeordnet. Die Schließeinheit 3 nimmt ein - nicht dargestelltes - Spritzgießwerkzeug auf.

Zur Herstellung eines Kunststoffformteils wird die Formmasse zunächst in dem Schneckenzylinder aufbereitet und über die Schneckenwelle 11 homogenisiert. Die plastifizierte Formmasse wird durch die Bohrung 131 des Flanschteils 13 durch den Durchlaufkanal 21 des Multifunktions-Bausteins 2 über die Düse 31 in das - nicht dargestellte - Spritzgießwerkzeug gespritzt, wodurch dieses verfüllt wird. Nachfolgend wird der Kolben 23 des Multifunktions-Bausteins 2 innerhalb des Druckkanals 22 in Richtung des Durchlaufkanals 21 bewegt, wodurch die in dem Kugelraum 132 des Flanschteils 13 befindliche Kugel 5 gegen die Bohrung 131 gedrückt wird, wodurch diese verschlossen wird. Gleichzeitig wird die noch in dem Durchlaufkanal 21 befindliche Formmasse in Richtung des - nicht dargestellten - Spritzgießwerkzeugs gedrückt, wodurch der erforderliche Nachdruck gebildet ist.

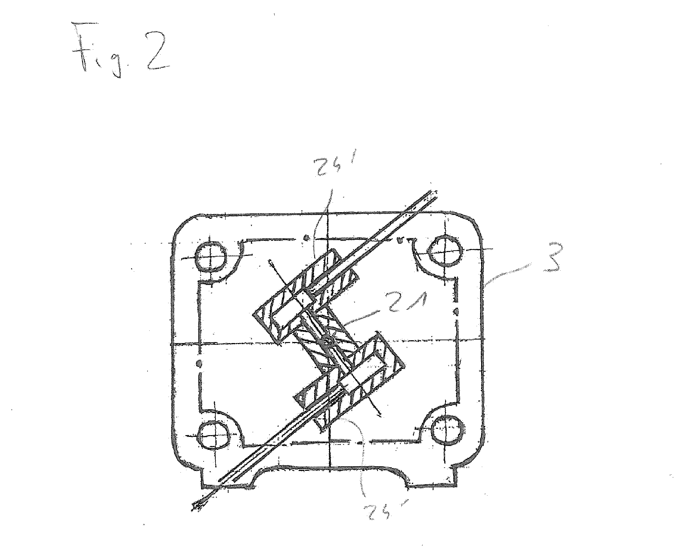

In Figur 2 ist eine mögliche Zylinderanordnung für den Multifunktions-Baustein 2 schematisch dargestellt. Hierbei sind zwei Hochdruckzylinder angeordnet, über welche der erforderliche Druck in dem Durchlaufkanal erzielt wird. Durch die Anordnung von zwei Zylindern ist eine geringere Dimensionierung dieser Zylinder ermöglicht, da diese jeweils nur die Hälfte des erforderlichen Nachdrucks erbringen müssen.

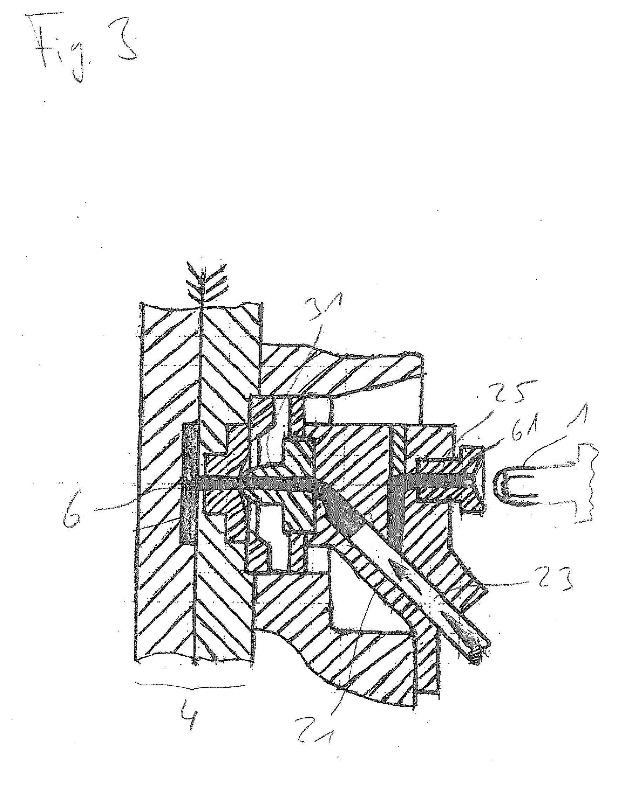

Im Ausführungsbeispiel gemäß Figur 3 ist im Anschluss an die Düse der Spritzeinheit ein abgewinkelter Speisekanal 25 angeordnet, der unter einem Winkel in den Durchlaufkanal 21 des Multifunktions-Bausteins 2 mündet. Dabei ist der Durchlaufkanal 21 des Multifunktions-Bausteins 2 in diesem Ausführungsbeispiel in einem Winkel von 45° zur Mittelachse der Düse 31 der Schließeinheit 3 angestellt. In dem Durchlaufkanal 21 ragt ein Kolben 23 eines - nicht dargestellten - Zylinders, der mit einem - nicht dargestellten - Frequenzgenerator verbunden ist.

Zur Herstellung eines Kunststoffformteils 6 ist der Kolben 23 der Einmündung des Speisekanals 25 vorgelagert positioniert, durch den die aufbereitete Formmasse 61 von der Spritzeinheit 1 über den Speisekanal 25 und den Durchlaufkanal 21 das Spritgießwerkzeug 4 eingespritzt wird. Nachfolgend wird der Kolben 23 in Richtung der Düse 31 der Schließeinheit 3 in dem Durchlaufkanal 21 bewegt, wodurch der Speisekanal 25 verschlossen und gleichzeitig der erforderliche Nachdruck gebildet wird. Im Ausführungsbeispiel wird der Kolben 23 über den - nicht dargestellten - Frequenzgenerator in Vibration versetzt, wodurch ein gepulster Nachdruck einem definierten Druckprofil erzeugt wird. Dadurch ist bewirkt, dass der dem Kolben 23 vorgelagerte Formmassepuffer, der den Anguss bildet, länger durchlässig ist und sich keine Schwimmhäute bilden.

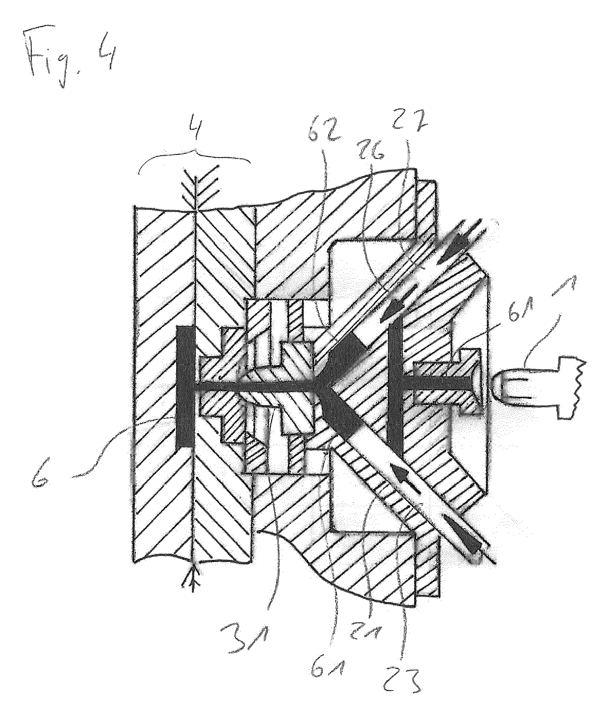

In einer weiteren Ausführungsform gemäß Figur 4 kann der Speisekanal 25 zusätzlich mit einem Einschäumkanal 26 für physikalische oder chemische Kunststoffschäume verbunden sein. Durchlaufkanal 21 und Einschäumkanal 26 sind hierzu im Ausführungsbeispiel beide über den Speisekanal 25 gespeist, wobei der Einschäumkanal 26 zusätzlich mit einer - nicht dargestellten - Aufschäumungszufuhr verbunden ist. Dabei ist auch in den Einschäumkanal 26 ein Kolben 27 verschiebbar angeordnet, über den der Speisekanal 25 gegenüber dem Einschäumkanal 26 verschließbar ist. Hierdurch besteht die Möglichkeit, durch den Einschäumkanal 26 eine geschäumte Schmelze und durch den Durchlaufkanal 21 eine Kompakt- Kunststoffhaut einzuspritzen.

Dabei wird zunächst der Speisekanal 25 über den Kolben 23 gegenüber dem Durchlaufkanal 21 verschlossen und über den Einschäumkanal 26 wird geschäumte Kunststoffmasse 62 eingebracht. Nachfolgend wird der Speisekanal 25 gegenüber dem Einschäumkanal 26 über den Kolben 27 verschlossen und durch den Kolben 23 freigegeben, so dass ungeschäumte Kunststoffmasse 61 über den Durchlaufkanal 21 eingebracht wird. Anschließend werden beide Kolben 23, 27 in Richtung der Düse 31 der Schließeinheit 3 in den Durchlaufkanal 21 bzw. den Einschäumkanal 26 bewegt, wodurch der Speisekanal 25 beidseitig verschlossen und gleichzeitig der erforderliche Nachdruck gebildet wird. Hierdurch ist die Herstellung geschäumter Kunststoffteile mit verbesserter Oberfläche ermöglicht.

In einer weiteren Ausgestaltung können der Durchlaufkanal 21 und der Einschäumkanal 26 auch jeweils mit einer separaten Spritzeinheit verbunden sein. Dabei wird der Einschäumkanal 26 direkt mit geschäumter Formmasse aus einer Spritzeinheit gespeist.

## Patentansprüche

1. Vorrichtung zum Spritzgießen von Kunststoffformteilen (6), umfassend eine eine Schneckenwelle (11) aufweisende Spritzeinheit (1) und eine Schließeinheit (3), die ein Spritzgießwerkzeug (4) aufnimmt, **dadurch gekennzeichnet, dass** zwischen Spritzeinheit (1) und Schließeinheit (3) ein Multifunktions-Baustein (2) angeordnet ist, der Mittel zur spritzeinheitunabhängigen Druckbeaufschlagung der in das Spritzgießwerkzeug (4) eingebrachten Formmasse (61) aufweist.

2. Vorrichtung nach Anspruch 1, **dadurch gekennzeichnet, dass** der Multifunktions-Baustein (2) einen Durchlaufkanal (21) aufweist, durch den die Formmasse (61) von der Spritzeinheit (1) in das von der Schließeinheit (3) aufgenommene Spritzgießwerkzeug (4) einbringbar ist und der an seinem der Spritzeinheit (1) zugewandten Ende über ein Ventil verschließbar ist, wobei wenigstens ein Druckkanal (22) angeordnet ist, der in den Durchlaufkanal (21) mündet und der mit Mitteln zur Druckerzeugung verbunden ist.

3. Vorrichtung nach Anspruch 2, **dadurch gekennzeichnet, dass** die Mittel zur Druckerzeugung einen Kolben (23) umfassen, der in dem Druckkanal (22) geführt ist.

4. Vorrichtung nach Anspruch 2 oder 3, **dadurch gekennzeichnet, dass** das Ventil durch eine dem Durchlaufkanal (22) vorgelagerte Kugel (5) gebildet ist.

5. Vorrichtung nach Anspruch 1, **dadurch gekennzeichnet, dass** der Multifunktions-Baustein (2) einen Durchlaufkanal (21) aufweist, in den ein Speisekanal (25) mündet, durch den Formmasse (61) durch den Durchlaufkanal (21) in das von der Schließeinheit (3) aufgenommene Spritzgießwerkzeug (4) einbringbar ist, wobei ein Kolben (23) angeordnet ist, der in dem Durchlaufkanal (21) geführt ist und derart verschiebbar ist, dass der Speisekanal (25) verschlossen ist.

6. Vorrichtung nach Anspruch 5, **dadurch gekennzeichnet, dass** der Durchlaufkanal (21) über einen Anschluss mit einem Einschäumkanal (26) für physikalische oder chemische Kunststoffschäume verbunden ist.

7. Vorrichtung nach Anspruch 6, **dadurch gekennzeichnet, dass** in den Einschäumkanal (26) ein Kolben (27) derart angeordnet und verschiebbar geführt ist, dass in einer Position der Speisekanal (25) gegenüber dem Einschäumkanal (26) verschlossen ist.

8. Vorrichtung nach einem der vorgenannten Ansprüche, **dadurch gekennzeichnet, dass** die Mittel zur Druckbeaufschlagung mit einem Frequenzgenerator verbunden sind, derart, dass eine gepulste Druckbeaufschlagung erzielbar ist.

9. Vorrichtung nach einem der vorgenannten Ansprüche, **dadurch gekennzeichnet, dass** zwei Schließeinheiten (3) angeordnet sind, die jeweils ein Spritzgießwerkzeug (4) aufnehmen und die über einen Multifunktions-Baustein (2) mit einer Spritzeinheit (1) verbunden sind.
